# FASCICULE DE BREVET EUROPEEN

(11) **EP 2 757 473 B1**
(45) Date de publication et mention de la délivrance du brevet: **02.08.2023**
(21) Numéro de dépôt: 13196432.2
(22) Date de dépôt: 10.12.2013
(51) Int. Cl.: G06F 9/48

(54) **Dispositif et procédé de contrôle d'affichage pour cockpit par partitionnement**
Vorrichtung und Verfahren zur Cockpit-Anzeigekontrolle durch Partitionierung
Device and method for controlling the display for a cockpit by partitioning

(30) Priorité: 21.12.2012 FR 1262654
(43) Date de publication de la demande: 23.07.2014
(73) Titulaire: Safran Electronics & Defense, 75015 Paris (FR)
(72) Inventeur: Andreoletti, Rémi, 77500 Chelles (FR); Pouget, Vianney, 94300 Vincennes (FR)
(74) Mandataire: Casalonga

(56) Documents cités:
- LARRY M KINNAN ED - ANONYMOUS: "Application migration from linux prototype to deployable ima platform using arinc 653 and open gl", DIGITAL AVIONICS SYSTEMS CONFERENCE, 2007. DASC '07. IEEE/AIAA 26 TH, IEEE, PI, 1 octobre 2007 (2007-10-01), pages 6.C.2-1, XP031166405, ISBN: 978-1-4244-1107-8
- JUSTIN LITTLEFIELD-LAWWILL ET AL: "System considerations for robust time and space partitioning in Integrated Modular Avionics", DIGITAL AVIONICS SYSTEMS CONFERENCE, 2008. DASC 2008. IEEE/AIAA 27TH, IEEE, PISCATAWAY, NJ, USA, 26 octobre 2008 (2008-10-26), pages 1.B.1-1, XP031372532, ISBN: 978-1-4244-2207-4
- CRAVEIRO J ET AL: "Architecture, mechanisms and scheduling analysis tool for multicore time-and space-partitioned systems", SIGBED REVIEW, ASSOCIATION FOR COMPUTING MACHINERY, INC, NEW YORK, NY, USA , 1 septembre 2011 (2011-09-01), pages 23-27, XP002712503, ISSN: 1551-3688, DOI: 10.1145/2038617.2038622 Extrait de l'Internet: URL:http://beru.univ-brest.fr/~singhoff/pu blications/files/craveiro11.pdf [extrait le 2013-09-09]

## Description

### Domaine technique

L'invention concerne le domaine de l'aéronautique et en particulier celui des systèmes de contrôle et d'affichage pour cockpits.

### Etat de la technique

La principale interface centralisée fournissant des fonctions d'affichage et de contrôle dans un cockpit d'avion moderne est connue sous le nom de « planche de bord tout écran » ou en anglais « Control and Display System » (CDS). Ce système est composé de calculateurs, unitairement appelé en anglais « Display Unit » ou (DU), pouvant intégrer ou être couplé chacun à une unité de calcul graphique, appelée en anglais « Graphical Processing Unit » ou (GPU), destinée à assurer les capacités d'affichage du DU.

Généralement, le GPU utilisé pour les DUs provient de composants disponibles grand public tels que les « Commercial Off The Shelf » ou (COTS) selon l'anglicisme connu. Ces composants ne sont cependant pas nativement destinés à traiter des données en temps réel, ce qui est le besoin pour l'affichage dans les cockpits. De fait ayant un design figé, certains mécanismes des GPU-COTS sont désactivés pour assurer un comportement déterministe des systèmes. Par ailleurs des limitations existent sur certaines fonctionnalités, comme le partitionnement graphique.

Les calculateurs DUs hébergent potentiellement plusieurs partitions. Une partition ou plus généralement le partitionnement (« partitionning » en anglais) est la fonction qui recouvre le mécanisme permettant de séparer des portions d'un système en laissant suffisamment d'indépendance/d'isolation entre les portions ou partitions de manière à autoriser des niveaux d'assurance de développement (« Development Assurance Level » DAL en anglais) pour chaque partition. Le partitionnement permet de réduire les efforts nécessaires pour les procédés de vérification des systèmes.

Lorsqu'une partition évolue, une analyse d'impact est systématiquement faite. En effet, la conception des calculateurs ne garantit pas nécessairement que les impacts d'une évolution restent contenus à la partition concernée. Si une partition se met à se comporter de façon erronée, elle peut, au niveau de la couche graphique, préempter l'exécution de symboles graphiques des autres partitions, pouvant aller jusqu'à leur perte. L'analyse d'impact procède à des tests dits de « non-régression ». Or de tels tests sont fastidieux, pouvant durer plusieurs mois, ce qui a un impact non négligeable sur le coût global.

On connaît de l'état de la technique les documents "Application migration from linux prototype to déployable IMA platform using ARINC 653 and open gl" de Larry M Kinnan, 2007 et "System considérations for robust time and space partitioning in Integrated Modular Avionics" de Justin Littlefiel-Lawill et al, 2008.

Le premier document décrit un dispositif d'affichage dans un cockpit, les applications avioniques, y compris celle en charge du dispositif d'affichage, sont partitionnées et s'exécutent dans leur propre environnement partitionné de façon temporelle et spatiale. Il ne décrit pas de dispositif de contrôle d'affichage couplé à une unité de traitement central pouvant exécuter des partitions, chaque partition ayant une durée d'exécution pour l'exécution d'un ou de plusieurs services graphiques. Le deuxième document décrit un environnement partitionné de façon spatiale et temporelle dans le cadre d'applications avioniques mais ne mentionne pas particulièrement le système d'affichage. Il se concentre sur le traitement des violations temporelles lors de l'exécution des partitions.

Ainsi, les solutions connues présentant les inconvénients précités, il existe le besoin d'une solution qui s'affranchisse des limitations existantes en proposant un nouveau dispositif et une méthode associée pour contrôler l'affichage graphique pour cockpit.

### Résumé de l'invention

La présente invention a pour objet un dispositif de surveillance et de contrôle de l'exécution de services graphiques de partitions d'unité d'affichage (DU) dans une unité de calcul graphique (GPU).

L'invention permet d'améliorer l'isolation et l'indépendance entre partitions au sein d'une unité de calcul graphique GPU embarquée.

Avantageusement, la présente invention contribue à limiter, à réduire voire supprimer les analyses et tests de non-régression en cas d'évolution d'une partition.

Toujours avantageusement, la présente invention améliore la sûreté des systèmes 'CDS'.

La présente invention s'applique avantageusement aux systèmes de contrôle et d'affichage des cockpits d'avion, mais elle est également applicable à tout environnement d'affichage critique.

Ainsi, l'invention a pour objet un dispositif de contrôle d'affichage et un procédé de contrôle d'affichage tels que définis dans les revendications indépendantes :
- un module de réception pour recevoir au moins une requête d'affichage d'au moins un service graphique pendant l'exécution d'une séquence d'une pluralité de partitions ;
- un module de configuration couplé au module de réception des requêtes pour définir la durée de la séquence, l'ordre et la durée de chaque partition ; et
- un module de contrôle couplé au module de configuration pour déterminer si la durée d'exécution restante de la partition dont ledit au moins un service graphique dépend est suffisante pour exécuter ou non ledit au moins un service graphique.

Dans un aspect particulier de l'invention, le dispositif comprend un compteur pour compter le temps d'exécution de ladite séquence.

Dans un aspect particulier de l'invention, le module de contrôle comprend un module de surveillance temporelle pour déterminer la partition en cours d'exécution à réception de ladite au moins une requête d'affichage.

Dans un aspect particulier de l'invention, le module de surveillance temporelle comprend des moyens pour calculer le temps restant avant la fin de l'exécution de la partition en cours d'exécution.

Dans un aspect particulier de l'invention, le dispositif comprend en outre des moyens pour stopper l'exécution du service graphique.

Avantageusement, les fonctions du module de contrôle sont réalisées par un programme d'ordinateur.

Dans un aspect particulier de l'invention, le module de réception est couplé à une unité de traitement central 'CPU' pour recevoir les requêtes d'affichage dudit au moins un service graphique.

Dans un aspect particulier de l'invention, l'unité de traitement central exécute une séquence de la pluralité de partitions dans un même ordre mais de durées de partition pouvant être différentes.

Dans une implémentation particulière, l'invention a pour objet une unité de traitement graphique 'GPU' pour cockpit qui comprend le dispositif de contrôle et d'affichage dans toutes ses variantes.

### Description des figures

D'autres caractéristiques et avantages de l'invention apparaîtront à l'aide de la description qui suit faite en regard des dessins annexés qui représentent :
La figure 1, un exemple d'association de calques graphiques à des partitions ;
La figure 2, une représentation schématique du dispositif de l'invention ;
La figure 3, un exemple de séquencement de partitions selon les principes de l'invention ; et
La figure 4, un logigramme du procédé de contrôle selon les principes de l'invention.

### Description détaillée de l'invention

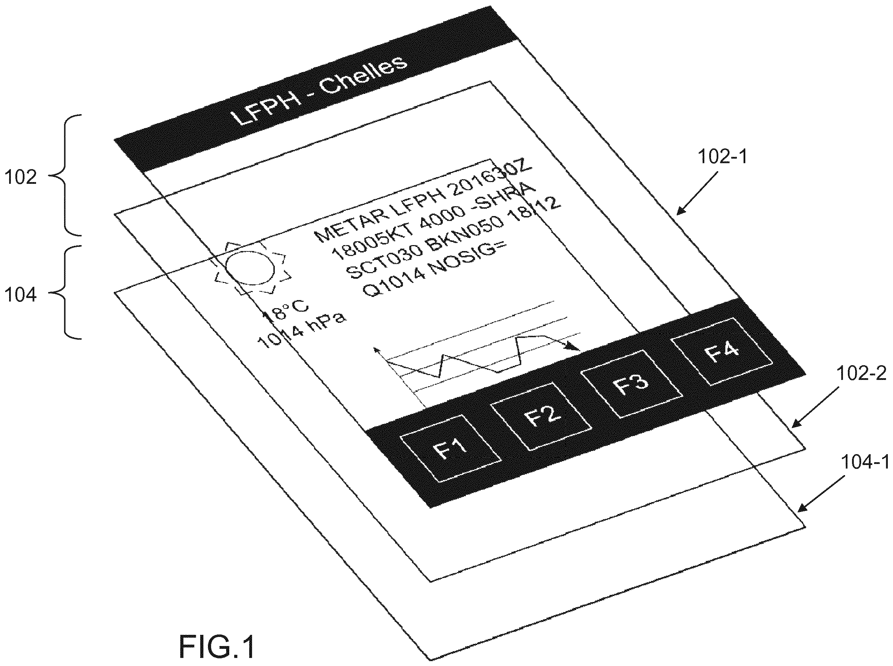

La figure 1 montre sur un exemple simplifié, une association de calques graphiques pour des partitions. Chaque calque graphique permet l'affichage de données relatives à un service graphique qui est demandé pendant l'exécution de la partition dont il dépend.

Deux calques graphiques (102-1, 102-2) sont associés à une première partition 102, signifiant que lors de l'exécution de la première partition, un calcul relatif aux informations à afficher pour le premier calque (102-1) est effectué pour permettre ensuite l'affichage de ces informations. Puis un calcul relatif aux informations du second calque (102-2) est effectué pour permettre l'affichage des données correspondantes.

De manière similaire un calque (104-1) est associé à une deuxième partition 104 et son contenu sera calculé et affiché lors de l'exécution de la deuxième partition.

L'homme de l'art comprendra que l'exemple montré est simplifié pour permettre une bonne compréhension des principes de l'invention, mais que cet exemple illustratif n'est en rien limitatif tant du nombre de calques par partition, que du nombre de partitions elles-mêmes.

Si lors de l'exécution d'une partition, un comportement erroné ou non attendu se produit, rallongeant alors le temps d'exécution de la partition au sein de l'unité de calcul graphique (GPU), le dispositif de l'invention tel que décrit en détail plus loin permet de stopper cette exécution et de maintenir le temps alloué pour l'exécution de partitions suivantes.

Par comportement erroné ou non attendu, l'homme du métier comprendra qu'il peut s'agir de demandes d'accès à un service graphique non autorisé ou d'accès à un service autorisé mais contenant des propriétés interdites ou encore d'accès à un service autorisé mais demandé à un moment non autorisé.

Avantageusement, le dispositif de contrôle de l'invention permet d'assurer un temps maximum d'exécution pour chaque calque au-delà duquel l'exécution s'arrête, soit normalement, soit en étant forcée par le dispositif de l'invention.

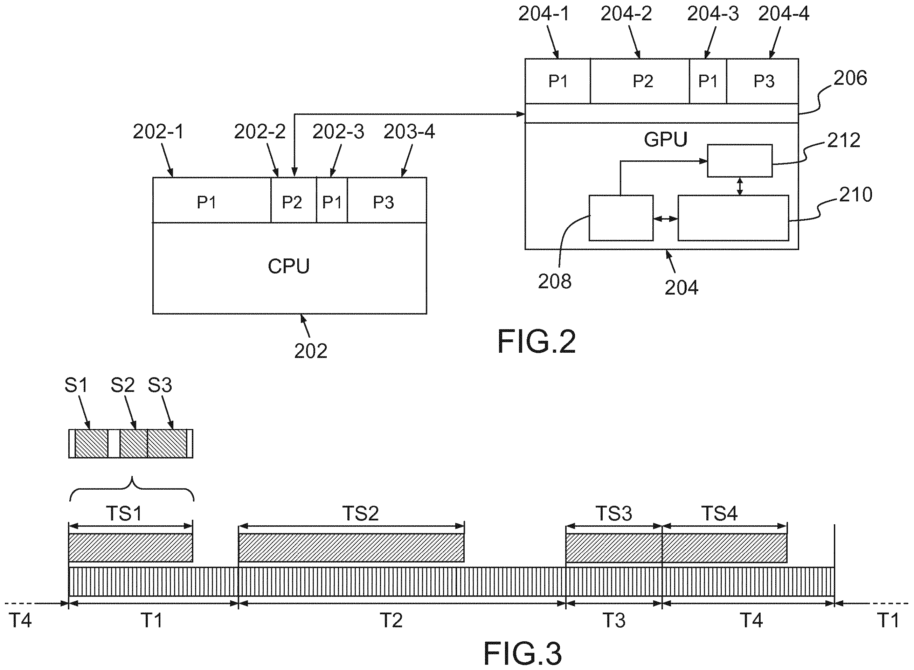

La figure 2 montre une représentation schématique du dispositif de l'invention. Un calculateur comprend un module CPU (202) qui peut exécuter une pluralité de partitions (202-1, 202-2, 202-3, 202-4) selon un ordonnancement donné (P1, P2, P1, P3).

L'unité CPU est couplée à une unité de calcul dédié ou GPU (204) qui reçoit des ordres d'affichage (ou services graphiques) pour les différentes partitions du CPU.

Au sein du GPU, un module d'ordonnancement (206) permet l'exécution des fonctions d'affichage. Le GPU comprend en outre, une table de configuration (208) couplée à un module de surveillance (210) et à un compteur (212).

De manière préférentielle, la table de configuration est une table statique dont le contenu est chargé au démarrage du calculateur. Elle définit au moins :
- la séquence majorante ou référante (« Frame » en anglais), qui fixe l'ordre des partitions dans les séquences à exécuter. Dans l'exemple choisi, l'ordre des partitions (204-1, 204-2, 204-3, 204-4) est (P1, P2, P1, P3) ;
- la durée maximum théorique d'exécution de chaque partition durant la séquence ; et
- la durée maximum de chaque service graphique qui pourra être appelé par une partition, durée aussi dénommée en anglais « Worst Case Execution Time » ou (WCET).

Bien que non illustré sur la figure, le GPU est couplé à des moyens conventionnels pour permettre l'affichage des services graphiques demandés.

Il est à noter que l'ordre des partitions au sein du GPU est identique à celui au sein du CPU mais que la durée d'exécution de chaque partition peut être différente.

Le principe opérationnel du dispositif de l'invention est maintenant décrit en référence à la figure 3 qui montre une séquence d'exécution de quatre partitions.

Une première partition (204-1) est exécutée pendant une durée maximum théorique de T1=10.000 micro-secondes. La deuxième partition (204-2) s'exécute sur une durée maximum théorique de T2=20.000 micro-secondes. La troisième partition (204-3) a une durée d'exécution maximum de T3=5.000 micro-secondes et la quatrième partition (204-4) a une durée maximum d'exécution de T4=10.000 micro-secondes.

Ainsi la séquence majorante a une valeur totale 'T' de (T1+T2+T3+T4 = 45.000 micro-secondes) pour l'exemple choisi. Cette valeur est stockée dans la table de configuration (208). Lors du démarrage du GPU, le compteur (212) du GPU s'arme sur la valeur totale et commence le décompte de la durée d'exécution.

Chaque partition a elle-même une tranche de temps ou en anglais « time slice » qui lui est allouée pour l'exécution du ou des services graphiques correspondants. Ainsi, respectivement pour les partitions 204-1 à 204-4, la durée de service est (TS1, TS2, TS3, TS4).

Lors de l'exécution d'une partition, les services graphiques demandés s'exécutent, tels que par exemple, les services S1, S2 et S3 pendant la durée TS1.

A partir des informations de la table de configuration (208) et de la valeur du compteur (212) à un instant `t', l'unité (210) de surveillance temporelle du GPU vérifie que pour chaque service graphique qui est appelé durant la tranche de temps d'une partition, il reste suffisamment de temps pour l'exécution de la partition avant le passage à la partition suivante. Si le temps restant n'est pas suffisant, l'exécution du service est stoppée et l'affichage de la partition erronée est inhibé.

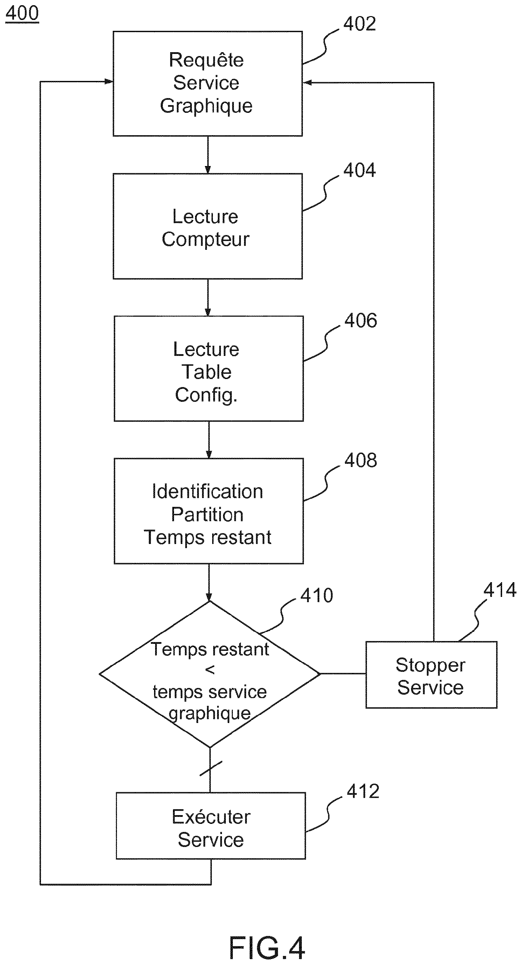

Le procédé (400) opéré au sein du GPU par le dispositif de l'invention est décrit en référence à la figure 4, en prenant pour exemple les valeurs de la séquence de la figure 3.

Le procédé débute pour chaque séquence, quand une requête de service graphique est détectée (402) au cours de l'exécution d'une partition. Par exemple, une demande de service graphique ayant un temps de service requis de 600 micro-secondes est reçue à 500 micro-secondes avant la fin de l'exécution de la troisième partition (204-3).

Le procédé permet dans une étape suivante (404) de lire la valeur courante du compteur (212) : le compteur qui décompte depuis le début de la séquence est ici égal à 10.500 micro-secondes, c'est-à-dire la valeur totale de la séquence (45.000 micro-secondes) moins le temps déjà écoulé, égal à (10.000 + 20.000 + 4500 = 34.500 micro-secondes).

Puis dans une étape suivante (406), le procédé permet de récupérer dans la table de configuration (208) les informations relatives à la séquence en cours, en particulier le séquencement des partitions (P1, P2, P1, P3), la durée de chaque partition (TS1, TS2, TS3, TS4) et le temps restant avant la fin de la séquence (soit ici 10.500 micro-secondes).

A l'étape suivante (408), à partir des informations lues dans la table et de la valeur du compteur, le procédé permet de déterminer quelle est la partition en cours d'exécution (ici la partition 204-3) puis de calculer le temps restant avant la fin de l'exécution de cette partition (ici 500 micro-secondes).

Dans une étape suivante (410), le procédé compare la valeur du temps restant calculé par rapport au temps d'exécution maximum du service appelé (soit 500 micro-secondes par rapport à 600 micro-secondes).

Si le temps restant est supérieur au temps d'exécution maximum du service, alors à l'étape suivante (412), le service est exécuté.

Si le temps restant est inférieur au temps d'exécution maximum du service, alors l'exécution est stoppée (414).

Puis, le procédé retourne à l'étape initiale (402) jusqu'à la fin du déroulement de la séquence.

Ainsi la présente description illustre une implémentation préférentielle de l'invention, mais n'est pas limitative. Un exemple a été choisi pour permettre une bonne compréhension des principes de l'invention, et une application concrète, mais il n'est en rien exhaustif et doit permettre à l'homme du métier d'apporter des modifications et variantes d'implémentation en gardant les mêmes principes. La présente invention peut s'implémenter à partir d'éléments matériel et/ou logiciel.

## Revendications

1. Dispositif de contrôle d'affichage couplé à une unité de traitement central (202) pouvant exécuter selon un ordre donné une séquence d'une pluralité de partitions, chaque partition, ayant une durée d'exécution pour l'exécution d'un ou de plusieurs services graphiques, le dispositif de contrôle d'affichage comprenant :
- un module (20 6) de réception pour recevoir au moins une requête d'affichage d'au moins un service graphique pendant l'exécution d'une séquence d'une pluralité de partitions
- un module (208) de configuration couplé au module de réception des requêtes pour définir une durée maximum d'exécution de la séquence, et une durée maximum d'exécution de chaque partition, la durée maximum d'exécution de la séquence correspondant à la somme des durées maximum d'exécution de toutes les partitions, une durée maximum d'exécution de chaque service graphique,
- un module (210, 212) de contrôle couplé au module de configuration pour :
- décompter depuis le début de l'exécution d'une séquence, la durée d'exécution de la séquence, et fournir une valeur courante pour la séquence en cours d'exécution ;
- déterminer la partition en cours d'exécution à partir de la valeur courante et des informations du module de configuration ;
- calculer le temps restant avant la fin de ladite partition en cours d'exécution et ;
- déterminer en fonction de la durée maximum d'exécution dudit service graphique et du temps restant avant la fin de la séquence, si la durée d'exécution restante de ladite partition en cours d'exécution est suffisante pour exécuter ou non ladite requête d'affichage dudit service graphique pendant l'exécution de la partition en cours, avant le passage à la partition suivante;
- exécuter ladite requête d'affichage dudit service graphique ou la stopper si la durée d'exécution restante n'est pas suffisante.

2. Dispositif selon la revendication 1, dans lequel le module de contrôle comprend un compteur (212) pour décompter la valeur de la durée d'exécution de ladite séquence.

3. Dspositif selon la revendication 1 ou 2, dans lequel le module de contrôle comprend un module (210) de surveillance temporelle pour déterminer la partition en cours d'exécution à réception de ladite au moins une requête d'affichage.

4. Dispositif selon la revendication 3, dans lequel le module de surveillance temporelle comprend des moyens pour calculer le temps restant avant la fin de l'exécution de la partition en cours d'exécution.

5. Dispositif selon l'une quelconque des revendications 1 à 4, comprenant en outre des moyens pour stopper l'exécution de la requête d'affichage dudit service graphique.

6. Dispositif selon l'une quelconque des revendications 1 à 5, dans lequel les fonctions du module de contrôle sont 30 réalisées par un programme d'ordinateur.

7. Dispositif selon l'une quelconque des revendications 1 à 6, dans lequel le module de réception est couplé à une unité de traitement central (CPU) (202) pour recevoir les requêtes d'affichage dudit au moins un service graphique.

8. Dispositif selon la revendication 7, dans lequel les durées d'exécution de chaque partition sont différentes des durées d'exécution de chaque partition au sein de l'unité de traitement central.

9. Unité de traitement graphique (GPU)' (204) pour cockpit comprenant un dispositif selon revendications 1 à 8.

10. Procédé de contrôle d'affichage pour cockpit, le procédé s'exécutant au sein d'une unité de traitement graphique (GPU) couplée à une unité de traitement central pouvant exécuter selon un ordre donné une séquence d'une pluralité de partitions, chaque partition ayant une durée d'exécution pour l'exécution d'un ou plusieurs services graphiques, le procédé comprenant les étapes de :
- recevoir une requête d'affichage d'au moins un service graphique pendant l'exécution d'une séquence d'une pluralité de partitions ;
- définir une durée maximum d'exécution de la séquence, une durée maximum d'exécution de chaque partition, la durée maximum d'exécution de la séquence correspondant à la somme des durées maximum d'exécution de toutes les partitions, une durée maximum d'exécution de chaque service graphique ;
- allouer des durées d'exécution à chaque partition pour l'exécution d'un ou plusieurs services graphiques ;
- décompter depuis le début de l'exécution d'une séquence, la valeur de la durée d'exécution de la séquence, et fournir une valeur courante pour la séquence en cours d'exécution ;
- déterminer la partition en cours d'exécution à partir de la valeur courante et des informations de durées d'exécution ;
- calculer le temps restant avant la fin de ladite partition en cours d'exécution ;
- déterminer en fonction de la durée maximum d'exécution dudit service graphique et du temps restant avant la fin de la séquence, si la durée d'exécution restante de ladite partition en cours d'exécution est suffisante pour exécuter ou non ladite requête d'affichage dudit service graphique pendant l'exécution de la partition en cours, avant le passage à la partition suivante et ;
- exécuter ladite requête d'affichage dudit service graphique ou la stopper si la durée d'exécution restante n'est pas suffisante.

## Patentansprüche

1. Anzeigesteuervorrichtung, die mit einer zentralen Verarbeitungseinheit (202) gekoppelt ist, die in einer gegebenen Reihenfolge eine Sequenz aus einer Vielzahl von Partitionen ausführen kann, wobei jede Partition eine Laufzeit für die Ausführung eines oder mehrerer Grafikdienste hat, wobei die Anzeigesteuervorrichtung Folgendes umfasst:
- ein Empfangsmodul (206) für den Empfang mindestens einer Anzeigeanfrage von mindestens einem Grafikdienst während der Ausführung einer Sequenz aus einer Vielzahl von Partitionen
- ein Konfigurationsmodul (208), das mit dem Anfrageempfangsmodul gekoppelt ist, um eine maximale Ausführungszeit der Sequenz und eine maximale Ausführungszeit jeder Partition einzustellen, wobei die maximale Ausführungszeit der Sequenz der Summe der maximalen Ausführungszeiten aller Partitionen entspricht, eine maximale Ausführungszeit jedes Grafikdienstes,
- ein mit dem Konfigurationsmodul gekoppeltes Steuermodul (210, 212), um:
- vom Beginn der Ausführung einer Sequenz die Dauer der Ausführung der Sequenz herunterzuzählen und einen aktuellen Wert für die laufende Sequenz bereitzustellen;
- die laufende Partition aus dem aktuellen Wert und den Informationen des Konfigurationsmoduls zu bestimmen;
- die verbleibende Zeit bis zum Ende der laufenden Partition zu berechnen, und;
- auf der Grundlage der maximalen Ausführungsdauer des Grafikdienstes und der verbleibenden Zeit bis zum Ende der Sequenz zu bestimmen, ob die verbleibende Ausführungsdauer der laufenden Partition ausreichend ist, um die Anzeigeanforderung des Grafikdienstes während der Ausführung der laufenden Partition vor dem Übergang zur nächsten Partition auszuführen oder nicht;
- die Anzeigeanforderung des Grafikdienstes auszuführen oder sie zu stoppen, wenn die verbleibende Ausführungszeit unzureichend ist.

2. Vorrichtung nach Anspruch 1, wobei das Steuermodul einen Zähler (212) zum Herunterzählen des Werts der Ausführungsdauer der Sequenz umfasst.

3. Vorrichtung nach Anspruch 1 oder 2, wobei das Steuermodul ein Modul (210) zur Zeitüberwachung umfasst, um bei Empfang der mindestens einen Anzeigeanforderung die laufende Partition zu bestimmen.

4. Vorrichtung nach Anspruch 3, wobei das Modul zur Zeitüberwachung Mittel zum Berechnen der verbleibenden Zeit bis zum Ende der Ausführung der laufenden Partition umfasst.

5. Vorrichtung nach einem der Ansprüche 1 bis 4, die ferner Mittel zum Stoppen der Ausführung der Anzeigeanforderung des genannten Grafikdienstes umfasst.

6. Vorrichtung nach einem der Ansprüche 1 bis 5, wobei die Funktionen des Kontrollmoduls durch ein Computerprogramm ausgeführt werden.

7. Vorrichtung nach einem der Ansprüche 1 bis 6, wobei das Empfangsmodul mit einer zentralen Verarbeitungseinheit (CPU) (202) gekoppelt ist, um die Anzeigeanforderungen des mindestens einen Grafikdienstes zu empfangen.

8. Vorrichtung nach Anspruch 7, wobei sich die Ausführungszeiten jeder Partition von den Ausführungszeiten jeder Partition innerhalb der zentralen Verarbeitungseinheit unterscheiden.

9. Grafikprozessoreinheit (GPU)' (204) für ein Cockpit mit einer Vorrichtung nach den Ansprüchen 1 bis 8.

10. Verfahren zur Anzeigesteuerung für ein Cockpit, wobei das Verfahren innerhalb einer Grafikverarbeitungseinheit (GPU) ausgeführt wird, die mit einer zentralen Verarbeitungseinheit gekoppelt ist, die in einer gegebenen Reihenfolge eine Sequenz aus einer Vielzahl von Partitionen ausführen kann, wobei jede Partition eine Laufzeit für die Ausführung eines oder mehrerer Grafikdienste hat, wobei das Verfahren die folgenden Schritte umfasst:
- Empfangen einer Anforderung zur Anzeige mindestens eines Grafikdienstes während der Ausführung einer Sequenz aus einer Vielzahl von Partitionen;
- Bestimmen einer maximalen Ausführungsdauer der Sequenz, einer maximalen Ausführungsdauer jeder Partition, wobei die maximale Ausführungsdauer der Sequenz der Summe der maximalen Ausführungsdauern aller Partitionen entspricht, einer maximalen Ausführungsdauer jedes grafischen Dienstes;
- Zuweisen von Laufzeiten für jede Partition, um einen oder mehrere grafische Dienste auszuführen;
- Herunterzählen des Werts der Ausführungsdauer einer Sequenz vom Beginn ihrer Ausführung an und Bereitstellen eines aktuellen Werts für die laufende Sequenz;
- Ermitteln der laufenden Partition anhand des aktuellen Wertes und der Laufzeitinformationen;
- Berechnen der verbleibenden Zeit bis zum Ende der besagten laufenden Partition;
- Ermitteln in Abhängigkeit von der maximalen Ausführungsdauer des Grafikdienstes und der verbleibenden Zeit bis zum Ende der Sequenz, ob die verbleibende Ausführungsdauer der laufenden Partition ausreichend ist, um die Anzeigeanforderung des Grafikdienstes während der Ausführung der laufenden Partition vor dem Übergang zur nächsten Partition auszuführen oder nicht, und;
- Ausführen der Anzeigeanforderung des Grafikdienstes oder Stoppen der Anzeigeanforderung, wenn die verbleibende Ausführungszeit nicht ausreichend ist.

## Claims

1. A display control device coupled to a central processing unit (202) that can execute according to a given order a sequence of a plurality of partitions, each partition having an execution duration for executing one or more graphic services, the display control device comprising:
- a reception module (206) for receiving at least one request for displaying at least one graphic service while executing a sequence of a plurality of partitions
- a configuration module (208) coupled to the request reception module for defining a maximum execution duration of the sequence, and a maximum execution duration of each partition, the maximum execution duration of the sequence corresponding to the sum of the maximum execution durations of all the partitions, a maximum execution duration of each graphic service,
- a control module (210, 212) coupled to the configuration module to:
- count down from the execution beginning of a sequence, the execution duration of the sequence, and provide a current value for the sequence being executed;
- determine the partition being executed from the current value and information of the configuration module;
- calculate the remaining time before the end of said partition being executed and;
- determine as a function of the maximum execution duration of said graphic service and of the remaining time before the end of the sequence, whether the remaining execution duration of said partition being executed is sufficient for executing or not said request for displaying said graphic service while executing the on-going partition, before switching to the following partition;
- execute said request for displaying said graphic service or stop the same if the remaining execution duration is not sufficient.

2. The device according to claim 1, wherein the control module comprises a counter (212) for counting down the value of the execution duration of said sequence.

3. The device according to claim 1 or 2, wherein the control module comprises a time monitoring module (210) for determining the partition being executed upon receiving said at least one display request.

4. The device according to claim 3, wherein the time monitoring module comprises means for calculating the remaining time before the execution end of the partition being executed.

5. The device according to any of claims 1 to 4, further comprising means for stopping execution of the request for displaying said graphic service.

6. The device according to any of claims 1 to 5, wherein the functions of the control module are carried out by a computer program.

7. The device according to any of claims 1 to 6, wherein the reception module is coupled to a central processing unit (CPU) (202) for receiving the request for displaying said at least one graphic service.

8. The device according to claim 7, wherein the execution durations of each partition are different from the execution durations of each partition within the central processing unit.

9. A graphic processing unit (GPU) (204) for a cockpit comprising a device according to claims 1 to 8.

10. A display control method for a cockpit, the method executing within a graphic processing unit (GPU) coupled to a central processing unit that can execute according to a given order a sequence of a plurality of partitions, each partition having an execution duration for executing one or more graphic services, the method comprising the steps of:
- receiving a request for displaying at least one graphic service while executing a sequence of a plurality of partitions;
- defining a maximum execution duration of the sequence, a maximum execution duration of each partition, the maximum execution duration of the sequence corresponding to the sum of the maximum execution durations of all the partitions, a maximum execution duration of each graphic service;
- allocating execution durations to each partition for executing one or more graphic services;
- counting down from the execution beginning of a sequence, the value of the execution duration of the sequence, and providing a current value for the sequence being executed;
- determining a partition being executed from the current value and information of execution durations;
- calculating the remaining time before the end of said partition being executed;
- determining as a function of the maximum execution duration of said graphic service and of the remaining time before the end of the sequence, whether the remaining execution duration of said partition being executed is sufficient for executing or not said request for displaying said graphic service while executing the on-going partition, before switching to the following partition; and
- executing said request for displaying said graphic service or stopping the same if the remaining execution duration is not sufficient.
